# NEW EUROPEAN PATENT SPECIFICATION

(11) **EP 3 714 698 B2**
(45) Date of publication and mention of the opposition decision: **11.11.2026**
(45) Mention of the grant of the patent: 14.02.2024
(21) Application number: 20161561.4
(22) Date of filing: 06.03.2020
(51) Int. Cl.: A22C 21/00

(54) **METHOD AND APPARATUS FOR OBTAINING A DRUMSTICK FROM A POULTRY'S LEG**
VERFAHREN UND VORRICHTUNG ZUM GEWINNEN EINER KEULE AUS EINEM GEFLÜGELBEIN
PROCÉDÉ ET APPAREIL POUR OBTENIR UN PILON À PARTIR D'UNE PATTE DE VOLAILLE

(30) Priority: 25.03.2019 NL 2022804
(43) Date of publication of application: 30.09.2020
(73) Proprietor: Meyn Food Processing Technology B.V., 1511 MA Oostzaan (NL)
(72) Inventor: VAN HILLO, Eric Adriaan, 1511 MA Oostzaan (NL)
(74) Representative: van Breda, Jacobus

(56) References cited:
- EP-A1- 0 442 554
- EP-A1- 0 858 740
- EP-A1- 2 329 721
- EP-A2- 1 164 857
- EP-A2- 1 574 134
- US-A- 4 993 113
- US-B2- 9 326 527

## Description

The invention relates to a method of providing a drumstick from a poultry's leg suspended by the ankles in hooks of a carrier, wherein said poultry's leg comprises said drumstick, a knee joint, and a thighbone from which the thighbone meat has been removed, said method comprising the step of clamping the poultry's leg with a clamp and arranging that the poultry's leg is kept in position, followed by the step of cutting the ligaments between the drumstick and the thighbone for removal of the thighbone and providing the drumstick.

The invention further relates to an apparatus comprising a series of carriers with hooks and arranged for providing drumsticks from poultry legs suspended by the ankles in respective hooks of the carriers, wherein each poultry's leg comprises a drumstick, a knee joint, and a thighbone from which the thighbone meat has been removed, said apparatus further comprising a clamp for clamping the poultry's leg and means to keep the poultry's leg in position, and a cutter for cutting the ligaments between the drumstick and the thighbone.

Such an apparatus and method are known from US 4,993,113, wherein figure 7 shows a poultry's leg comprising a drumstick, a knee joint, and a thighbone from which the thigh meat has been stripped, wherein the poultry's leg is suspended by the ankles from a carrier. The apparatus for providing the drumstick comprises a construction to clamp the poultry's leg in a bended position against guide rails, whereafter a cutting blade cuts through the ligaments between the drumstick and the thighbone.

US 2017/0006883 discloses another method and apparatus wherein a poultry leg is suspended by the ankles from the hooks of a carrier, and wherein the poultry leg comprises a drumstick, and knee joint and a thighbone, this time with thigh meat still attaching to the thighbone. The poultry's leg is guided through a slot and thus more or less placed in position, albeit without clamping. A cutting tool then separates the thighbone from the drumstick.

A method and device with the features according to the preambles of claims 1 and 3 is known from EP 0 442 554. In this known method and device a cutter is positioned at a predetermined altitude and is activated to cut through the knee joint so as to separate the thighbone from the drumstick.

It is an object of the invention to improve the accuracy of the apparatus and method for providing a drumstick, so as to provide a visibly perfect or near to perfect drumstick.

Accordingly the invention proposes a method and apparatus with features according to one or more of the appended claims.

It is essential for the method of the invention that the step of clamping the poultry's leg is followed by raising the clamp with the poultry's leg so as to raise the ankles from the hooks of the carrier and arrange that the knee joint is positioned at the predetermined altitude of the cutter, before the cutter is activated to cut through the knee joint so as to separate the thighbone from the drumstick.

In a preferred embodiment initially a step of at least gently clamping the meat on the poultry's leg is executed which is followed by raising the clamp with the poultry's leg so as to raise the ankles from the hooks of the carrier and to arrange that the knee joint is positioned at a predetermined altitude, and by subsequently providing that the poultry's leg is firmly or tightly clamped to fix the knee-joint at the predetermined altitude, and a cutter is positioned at said predetermined altitude and is activated to cut through the knee joint so as to separate the thighbone from the drumstick.

Within the scope of the invention the word clamping can be one of gently and firmly or tightly. These relative terms *gently* and *firmly* or *tightly* have the following meaning. The term *gently* in connection with the *clamping* action means that the clamp engages the poultry leg to ensure that the meat on the poultry leg is supported by the clamp, yet leaves some room for movement of the poultry leg vis-à-vis the clamp so as to arrange that the lifting action on the poultry leg automatically accommodates for different poultry leg sizes. The terms *firmly* or *tightly* in connection with the *clamping* action means that the clamp holds the poultry leg so tight that maintaining the position of the knee joint at the required altitude is ensured by avoiding any slippage in the clamp.

Accordingly it is essential for the apparatus of the invention that the clamp is liftable and is arranged to raise the poultry's leg after clamping the poultry's leg, preferably at the thigh or thighbone, so as to raise the ankles from the hooks of the carrier and to arrange that the knee joint is positioned at a predetermined altitude where the cutter is positioned, and that the cutter is arranged to be activated after raising the knee-joint to the predetermined altitude to cut through the knee joint so as to separate the thigh-bone from the drumstick.

In a preferred embodiment the clamp is liftable and is arranged to raise the poultry's leg after at least gently clamping the poultry's leg so as to raise the ankles from the hooks of the carrier and to arrange that the knee joint is positioned at a predetermined altitude, and that the clamp is arranged to subsequently firmly or tightly clamp the poultry's leg to fix the knee-joint at the predetermined altitude, and that the cutter is positioned at said predetermined altitude and is arranged to be activated when the clamp tightly clamps the knee-joint so as to cut through the knee joint to separate the thighbone from the drumstick.

The invention will hereinafter be further elucidated with reference to a drawing of a non-limiting exemplary embodiment of the apparatus and its use in accordance with the invention.

In the drawing:
- figures 1A and 1B show an apparatus of the invention in a side view and top view, respectively, without clamping a poultry's leg;
- figures 2A and 2B show the apparatus of the invention in a side view and top view, respectively, after clamping the poultry's leg;
- figures 3A and 3B show the apparatus of the invention in a side view and top view, respectively, after clamping and raising the poultry's leg;
- figure 4 shows the apparatus of the invention in a top view during cutting the poultry's leg at the altitude of the knee-joint.

Whenever in the figures the same reference numerals are applied, these numerals refer to the same parts.

In the respective figures of the drawing, the apparatus of the invention is depicted with reference 1. This apparatus 1 comprises in known way a series of carriers with hooks. For clarity only a single carrier 2 with a hook 3 is shown. In the hook 3 of the carrier 2 a poultry leg 5 is suspended by the ankles 6, wherein in known way each poultry's leg 5 comprises a drumstick 4, a knee joint 7, and a thighbone 8 from which the thighbone meat has been removed.

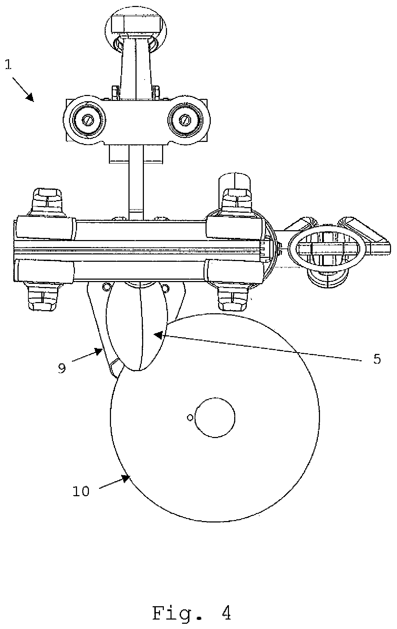

The apparatus 1 further comprises a clamp 9 for clamping the poultry's leg 5, which clamp 9 is used in the invention to lift the poultry leg 5 and to keep the poultry's leg 5 in position. Further figure 4 depicts a cutter 10 for cutting the ligaments between the drumstick 4 and the thighbone 8.

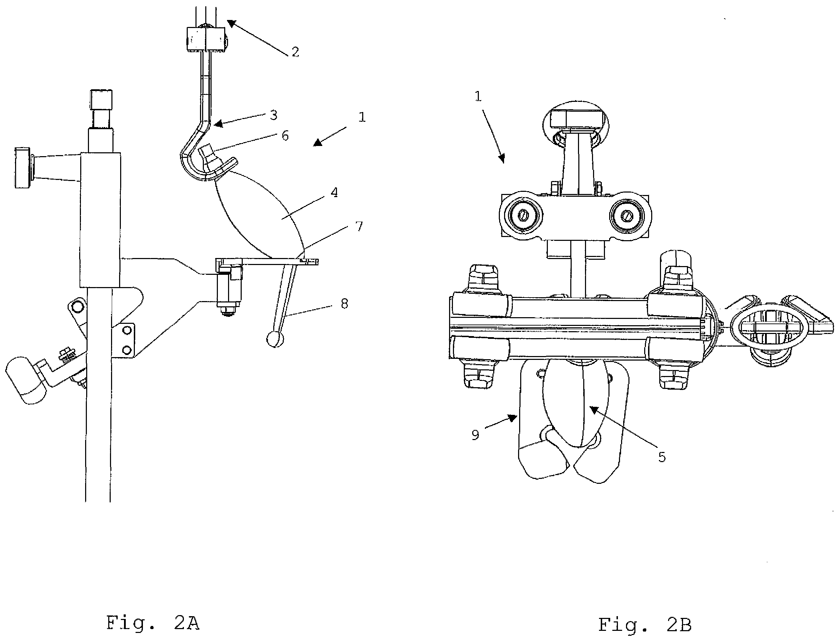

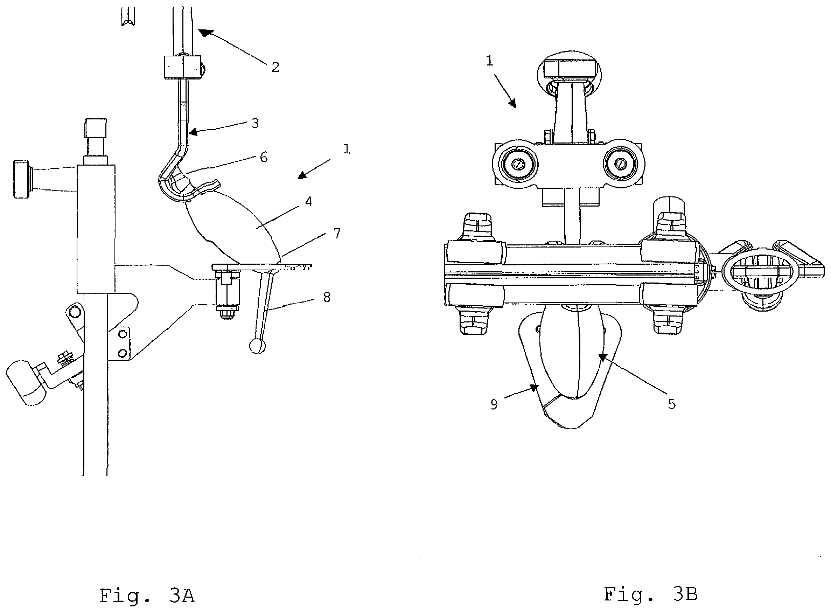

From comparing figures 2A/2B with figures 3A/3B, it will be clear that the clamp 9 is liftable and is arranged to raise the poultry's leg 5 after clamping the poultry's leg 5 so as to raise the ankles 6 from the hooks 3 of the carrier 2 and to arrange that the knee joint 7 is positioned at a predetermined altitude. The cutter 10 is positioned at said predetermined altitude and is arranged to be activated after raising the knee joint 7 to the predetermined altitude to cut through the knee joint 7 so as to separate the thighbone 8 from the drumstick 4.

The apparatus 1 preferably functions in the following way to execute a preferred embodiment of the method of the invention.

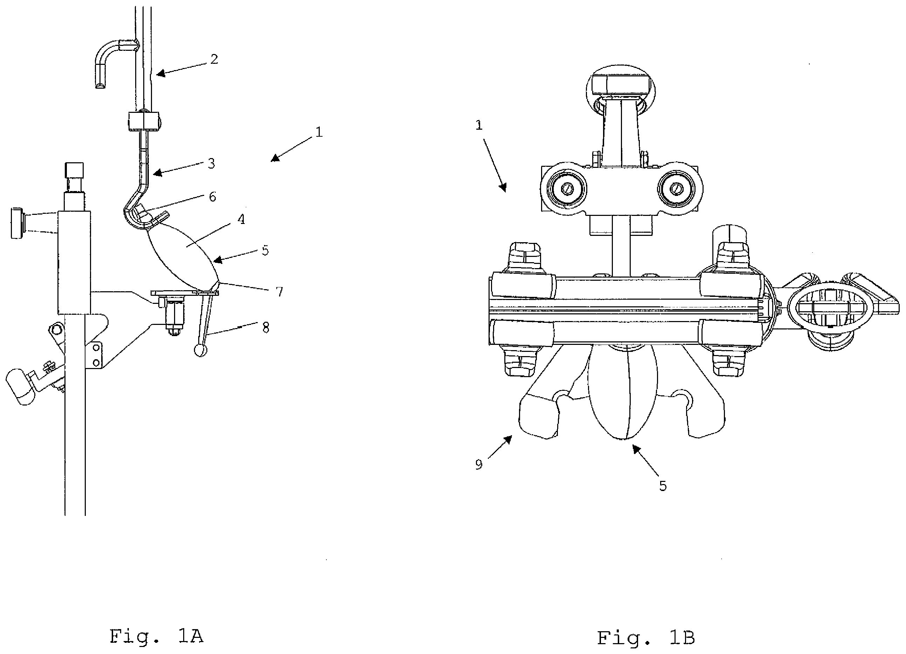

In figures 1A/1B is shown that in the hook 3 of the carrier 2 a poultry leg 5 is suspended by the ankles 6, wherein the poultry's leg 5 comprises a drumstick 4, a knee joint 7, and a thighbone 8 from which -in this embodiment- the thighbone meat has been removed. It is however also possible to execute the method of the invention wherein the thighbone meat is still present on the thighbone 8. The poultry's leg 5 is freely suspended without clamping.

Subsequently figures 2A/2B show that the clamp 9 has been activated to gently clamp the poultry's leg 5. Figures 3A/3B show that thereafter the clamp 9 raises the poultry's leg 5 to lift the ankles 6 from the hooks 3 of the carrier 2, so as to exactly place the knee joint 7 at a predetermined altitude. After raising the clamp 9 as depicted in figures 3A/3B, the clamp 9 is then initiated to firmly or tightly clamp the poultry leg 5 so as to fix the knee-joint 7 at the predetermined altitude. Figure 4 then shows that the cutter 10 is activated for cutting the ligaments between the drumstick 4 and the thighbone 8, so as to release the thighbone 8 and separate it from the drumstick 4. What remains is indeed a drumstick 4 which has a perfect visible appearance, therewith promoting the monetary value represented by this drumstick.

### Legend

- 1: apparatus
- 2: carrier
- 3: hook
- 4: drumstick
- 5: poultry leg
- 6: ankles
- 7: knee joint
- 8: thighbone
- 9: clamp
- 10: cutter

Although the invention has been discussed in the foregoing with reference to an exemplary embodiment of the method and apparatus of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Method of providing a drumstick (4) from a poultry's leg (5) suspended by the ankles (6) in hooks (3) of a carrier (2), wherein said poultry's leg (5) comprises said drumstick (4), a knee joint (7), and a thighbone (8) from which the thighbone meat has been removed, said method comprising the step of clamping the poultry's leg (5) with a clamp (9) and arranging that the poultry's leg (5) is kept in position, followed by the step of cutting the ligaments between the drumstick (4) and the thighbone (8) for removal of the thighbone from which the thighbone meat has been removed by providing that a cutter (10) is positioned at a predetermined altitude and is activated to cut through the knee joint (7) so as to separate the thighbone (8) from the drumstick (4), and providing the drumstick (4), **characterized in that** the step of clamping the poultry's leg (5) is followed by raising the clamp (9) with the poultry's leg (5) so as to raise the ankles (6) from the hooks (3) of the carrier (2) and arrange that the knee joint (7) is positioned at the predetermined altitude before the cutter (10) is activated to cut through the knee joint (7) so as to separate the thighbone (8) from the drumstick (4).

2. Method according to claim 1, **characterized in that** initially a step of at least gently clamping the poultry's leg (5) is executed which is followed by raising the clamp (9) with the poultry's leg (5) so as to raise the ankles (6) from the hooks (3) of the carrier (2) and to arrange that the knee joint (7) is positioned at a predetermined altitude, and by subsequently providing that the poultry's leg is firmly or tightly clamped to fix the knee-joint at the predetermined altitude, and a cutter (10) is positioned at said predetermined altitude and is activated to cut through the knee joint (7) so as to separate the thighbone (8) from the drumstick (4).

3. Apparatus (1) comprising a series of carriers (2) with hooks (3) and arranged for providing drumsticks (4) from poultry legs (5) suspended by the ankles (6) in respective hooks (3) of the carriers (2), wherein each poultry's leg (5) comprises a drumstick (4), a knee joint (7), and a thighbone (8) from which the thighbone meat has been removed, said apparatus (1) further comprising a clamp (9) for clamping the poultry's leg (5) and to keep the poultry's leg (5) in position, and a cutter (10) for cutting the ligaments between the drumstick (4) and the thighbone (8), wherein the cutter (10) is positioned at a predetermined altitude, **characterized in that** the clamp (9) is liftable and is arranged to raise the poultry's leg (5) after clamping the poultry's leg (5) so as to raise the ankles (6) from the hooks (3) of the carrier (2) and to arrange that the knee joint (7) is positioned at the predetermined altitude and the cutter (10) is arranged to be activated after raising the knee-joint (7) to the predetermined altitude to cut through the knee joint (7) so as to separate the thighbone (8) from the drumstick (4).

4. Apparatus (1) according to claim 3, **characterized in that** the clamp (9) is arranged to raise the poultry's leg (5) after at least gently clamping the poultry's leg (5) so as to raise the ankles (6) from the hooks (3) of the carrier (2) and to arrange that the knee joint (7) is positioned at a predetermined altitude, and that the clamp (9) is arranged to subsequently firmly or tightly clamp the poultry's leg to fix the knee-joint at the predetermined altitude, and that the cutter (10) is positioned at said predetermined altitude and is arranged to be activated when the clamp (9) tightly clamps the knee-joint (7) so as to cut through the knee joint (7) to separate the thighbone (8) from the drumstick (4).

## Patentansprüche

1. Verfahren zum Bereitstellen einer Keule (4) aus einem Geflügelbein (5), das an den Knöcheln (6) in Haken (3) eines Trägers (2) aufgehängt ist, wobei das Geflügelbein (5) die Keule (4), ein Kniegelenk (7), und einen Oberschenkelknochen (8) umfasst, von dem das Oberschenkelfleisch entfernt wurde, wobei das Verfahren den Schritt des Einklemmens des Geflügelbeins (5) mit einer Klemme (9) und das Einrichten, dass das Geflügelbein (5) in Position gehalten wird, umfasst, gefolgt von dem Schritt des Durchschneidens der Bänder zwischen der Keule (4) und dem Oberschenkelknochen (8) zum Entfernen des Oberschenkelknochens, von dem das Oberschenkelfleisch entfernt wurde, indem ein Schneidwerkzeug (10) in einer vorbestimmten Höhe positioniert und aktiviert wird, um durch das Kniegelenk (7) zu schneiden, um den Oberschenkelknochen (8) von der Keule (4) zu trennen, und die Keule (4) bereitzustellen, **dadurch gekennzeichnet, dass** auf den Schritt des Einklemmens des Geflügelbeins (5) das Anheben der Klemme (9) mit dem Geflügelbein (5) folgt, um die Knöchel (6) von den Haken (3) des Trägers (2) anzuheben und einzurichten, dass das Kniegelenk (7) in der vorbestimmten Höhe positioniert ist, bevor die Schneidvorrichtung (10) aktiviert wird, um durch das Kniegelenk (7) zu schneiden, um den Oberschenkelknochen (8) von der Keule (4) zu trennen.

2. Verfahren nach Anspruch 1, **dadurch gekennzeichnet, dass** anfänglich ein Schritt des mindestens sanften Einklemmens des Geflügelbeins (5) ausgeführt wird, gefolgt vom Anheben der Klemme (9) mit dem Geflügelbein (5), um die Knöchel (6) von den Haken (3) des Trägers (2) zu heben und einzurichten, dass das Kniegelenk (7) in einer vorbestimmten Höhe positioniert ist, und durch darauffolgendes Vorsehen, dass das Geflügelbein fest oder eng eingeklemmt ist, um das Kniegelenk in der vorbestimmten Höhe zu fixieren, und ein Schneidwerkzeug (10) in der vorbestimmten Höhe positioniert und aktiviert wird, um durch das Kniegelenk (7) zu schneiden, um den Oberschenkelknochen (8) von der Keule (4) zu trennen.

3. Vorrichtung (1), die eine Reihe von Trägern (2) mit Haken (3) umfasst, die eingerichtet ist, um Keulen (4) aus Geflügelbeinen (5) bereitzustellen, die an den Knöcheln (6) in jeweiligen Haken (3) der Träger (2) hängen, wobei jedes Geflügelbein (5) eine Keule (4), ein Kniegelenk (7) und einen Oberschenkelknochen (8) umfasst, von dem das Oberschenkelfleisch entfernt wurde, wobei die Vorrichtung (1) ferner eine Klemme (9) zum Einklemmen des Geflügelbeins (5) und zum Halten des Geflügelbeins (5) in Position umfasst, und ein Schneidwerkzeug (10) zum Durchschneiden der Bänder zwischen der Keule (4) und dem Oberschenkelknochen (8), wobei das Schneidwerkzeug (10) in einer vorbestimmten Höhe positioniert ist, **dadurch gekennzeichnet, dass** die Klemme (9) anhebbar ist und eingerichtet ist, um das Geflügelbein (5) nach dem Einklemmen des Geflügelbeins (5) anzuheben, um die Knöchel (6) von den Haken (3) des Trägers (2) zu heben und einzurichten, dass das Kniegelenk (7) in der vorbestimmten Höhe positioniert ist, und das Schneidwerkzeug (10) eingerichtet ist, um nach dem Anheben des Kniegelenks (7) in die vorbestimmte Höhe aktiviert zu werden, um durch das Kniegelenk (7) zu schneiden, um den Oberschenkelknochen (8) von der Keule (4) zu trennen.

4. Vorrichtung (1) nach Anspruch 3, **dadurch gekennzeichnet, dass** die Klemme (9) eingerichtet ist, um das Geflügelbein (5) nach mindestens dem sanften Einklemmen des Geflügelbeins (5) so anzuheben, dass die Knöchel (6) von den Haken (3) des Trägers (2) angehoben werden und einzurichten, dass das Kniegelenk (7) in einer vorbestimmten Höhe positioniert ist, und dass die Klemme (9) eingerichtet ist, um anschließend das Geflügelbein fest oder eng einzuklemmen, um das Kniegelenk in der vorbestimmten Höhe zu fixieren, und dass das Schneidwerkzeug (10) in der vorbestimmten Höhe positioniert und eingerichtet ist, um aktiviert zu werden, wenn die Klemme (9) das Kniegelenk (7) fest einklemmt, um durch das Kniegelenk (7) zu schneiden und den Oberschenkelknochen (8) von der Keule (4) zu trennen.

## Revendications

1. Procédé de fourniture d'un pilon (4) à partir d'une jambe de volaille (5) suspendue par les chevilles (6) dans des crochets (3) d'un support (2), dans lequel ladite jambe de volaille (5) comprend ledit pilon (4), une articulation de genou (7), et un os de cuisse (8) à partir duquel la viande de l'os de cuisse a été retirée, ledit procédé comprenant l'étape de serrage de la jambe de volaille (5) avec une pince (9) et de maintien de la jambe de volaille (5) en position, suivie de l'étape de coupe des ligaments entre le pilon (4) et l'os de cuisse (8) pour le retrait de l'os de cuisse à partir duquel la viande d'os de cuisse a été retirée en faisant en sorte qu'un dispositif de coupe (10) soit positionné à une hauteur prédéterminée et soit activé pour sectionner l'articulation de genou (7) de manière à séparer l'os de cuisse (8) du pilon (4), et en fournissant le pilon (4), **caractérisé en ce que** l'étape de serrage de la jambe de volaille (5) est suivie de l'élévation de la pince (9) avec la jambe de poulet (5) de manière à élever les chevilles (6) à partir des crochets (3) du support (2) et à positionner l'articulation de genou (7) à la hauteur prédéterminée avant que le dispositif de coupe (10) ne soit activé pour sectionner l'articulation de genou (7) de manière à séparer l'os de cuisse (8) du pilon (4).

2. Procédé selon la revendication 1, **caractérisé en ce qu'**initialement une étape de serrage au moins en douceur de la jambe de volaille (5) est exécutée qui est suivie de l'élévation de la pince (9) avec la jambe de volaille (5) de manière à élever les chevilles (6) à partir des crochets (3) du support (2) et à positionner l'articulation de genou (7) à une hauteur prédéterminée, et en faisant ensuite en sorte que la jambe de volaille soit fermement ou étroitement serrée pour fixer l'articulation de genou à la hauteur prédéterminée, et un dispositif de coupe (10) est positionné à ladite hauteur prédéterminée et est activé pour sectionner l'articulation de genou (7) de manière à séparer l'os de cuisse (8) du pilon (4).

3. Appareil (1) comprenant une série de supports (2) dotés de crochets (3) et agencés pour fournir des pilons (4) à partir de jambes de volaille (5) suspendues par les chevilles (6) dans des crochets respectifs (3) des supports (2), dans lequel chaque jambe de volaille (5) comprend un pilon (4), une articulation de genou (7), et un os de cuisse (8) à partir duquel la viande d'os de cuisse a été retirée, ledit appareil (1) comprenant en outre une pince (9) permettant de serrer la jambe de volaille (5) et de maintenir la jambe de volaille (5) en position, et un dispositif de coupe (10) permettant de couper les ligaments entre le pilon (4) et l'os de cuisse (8), dans lequel le dispositif de coupe (10) est positionné à une hauteur prédéterminée, **caractérisé en ce que** la pince (9) peut être levée et est agencée pour élever la jambe de volaille (5) après le serrage de la jambe de volaille (5) de manière à élever les chevilles (6) à partir des crochets (3) du support (2) et à faire en sorte que l'articulation de genou (7) soit positionnée à la hauteur prédéterminée et le dispositif de coupe (10) soit agencé pour être activé après l'élévation de l'articulation de genou (7) à la hauteur prédéterminée pour sectionner l'articulation de genou (7) de manière à séparer l'os de cuisse (8) du pilon (4).

4. Appareil (1) selon la revendication 3, **caractérisé en ce que** la pince (9) est agencée pour élever la jambe de volaille (5) après le serrage au moins en douceur de la jambe de volaille (5) de manière à élever les chevilles (6) à partir des crochets (3) du support (2) et à faire en sorte que l'articulation de genou (7) soit positionnée à une hauteur prédéterminée, et que la pince (9) soit agencée pour serrer ensuite fermement ou étroitement la jambe de volaille pour fixer l'articulation de genou à la hauteur prédéterminée, et que le dispositif de coupe (10) soit positionné à ladite hauteur prédéterminée et soit agencé pour être activé lorsque la pince (9) serre étroitement l'articulation de genou (7) de manière à sectionner l'articulation de genou (7) pour séparer l'os de cuisse (8) du pilon (4).
